# EUROPEAN PATENT APPLICATION

(11) **EP 4 266 408 A1**
(43) Date of publication of application: **25.10.2023**
(21) Application number: 21911447.7
(22) Date of filing: 20.12.2021
(51) Int. Cl.: H01M 4/36, H01M 4/587, H01M 4/62, H01M 10/0525, C01B 32/21

(54) **ANODE ACTIVE MATERIAL FOR LITHIUM SECONDARY BATTERY, PREPARATION METHOD THEREFOR, AND LITHIUM SECONDARY BATTERY INCLUDING SAME**

(30) Priority: 21.12.2020 KR 20200179374
(71) Applicant: POSCO Holdings Inc., Seoul 06194 (KR); RESEARCH INSTITUTE OF INDUSTRIAL SCIENCE & TECHNOLOGY, Pohang-si, Gyeongsangbuk-do 37673 (KR); POSCO Chemical Co., Ltd, Gyeongsangbuk-do 37918 (KR)
(72) Inventor: LEE, Gang Ho, Pohang-si, Gyeongsangbuk-do 37671 (KR); AN, Jung-Chul, Pohang-si, Gyeongsangbuk-do 37673 (KR); PARK, Sei Min, Pohang-si, Gyeongsangbuk-do 37655 (KR); YOON, Jong Hoon, Pohang-si, Gyeongsangbuk-do 37591 (KR); JO, Hyun-Chul, Pohang-si, Gyeongsangbuk-do 37834 (KR)
(74) Representative: Potter Clarkson
(86) International application number: PCT/KR2021/019432
(87) International publication number: WO 2022/139380

(57) **Abstract**

It is related to a manufacturing method of negative electrode active material for lithium secondary battery, comprising: preparing an artificial graphite; forming a coating layer covering the artificial graphite by mixing the artificial graphite and a liquid coating material; and carbonizing the artificial graphite on which the coating layer is formed; wherein, the liquid coating material has a viscosity of 300 to 25000 mPa s at 35 °C; a negative electrode active material according to the method; and a lithium secondary battery including the same.

## Description

### Field of the Invention

The present disclosure is related to a negative electrode material, method of preparing the same and lithium secondary battery. Specifically, the present invention relates to a negative electrode active material for a lithium secondary battery having excellent electrode adhesion and excellent battery performance, a manufacturing method thereof, and a lithium secondary battery including the same.

### Description of the Related Art

Since the graphite/carbon-based negative electrode active material used as the negative electrode of the lithium secondary battery has a potential close to the electrode potential of lithium metal, the change in crystal structure during the intercalation and deintercalation of ionic lithium is small, enabling a continuous and repeated oxidation reduction reaction at the electrode, providing the basis for the lithium secondary battery to exhibit high capacity and excellent cycle-life.

Various types of materials are used as carbon-based negative electrode active materials, such as natural graphite and artificial graphite, which are crystalline carbon-based materials, or hard carbon and soft carbon, which are amorphous carbon-based materials.

Among them, graphite-based active materials are the most widely used, as they are highly reversible and can improve the cycle-life characteristic of lithium secondary batteries. Since graphite active material has a lower discharge voltage of -0.2 V compared to lithium, a battery with graphite active material can exhibit a discharge voltage as high 3.6V. Therefore, it offers many advantages over lithium secondary batteries in terms of energy density.

An artificial graphite, a crystalline carbon-based material, has a more stable crystal structure than natural graphite because it is made by applying high heat energy of more than 2,700°C to create the crystal structure of graphite. Even with repeated charging and discharging of lithium ions, the crystal structure changes are small, resulting in a relatively long cycle-life.

In general, an artificial graphite-based negative electrode active material has a cycle-life that is two to three times longer than natural graphite. Soft carbon and hard carbon, which are amorphous carbonaceous materials with unstabilized crystal structures, are characterized by smoother entry of lithium ions. Therefore, it can be used in electrodes that require fast charging because it can increase the charge and discharge speed.

Considering the cycle-life characteristic and output characteristic of the lithium secondary battery to be used, it is common to use a mixture of the above carbon-based materials in a certain ratio to each other. Meanwhile, improving high temperature performance (storage characteristics at a high temperature and high temperature cycle characteristic) in a lithium secondary battery is an important challenge.

If the total internal pore volume is high after the negative electrode active material is applied to the current collector and rolled, the high temperature performance of the negative electrode is likely to be deteriorated. Therefore, it is necessary to improve the high temperature characteristic of lithium secondary batteries by minimizing the changes in electrode structure and internal total pore volume that occur during electrode rolling.

In particular, when developing negative electrode materials for fast-charging secondary batteries, improvement of high temperature characteristic is further required. With the technological development and increasing demand for mobile devices, the demand for secondary batteries as an energy source is increasing rapidly.

Among such secondary batteries, lithium secondary batteries, which exhibit high energy density and operating potential, long cycle characteristic, and low self-discharge rate, are commercially available and widely used.

In addition, as interest in environmental issues grows, there is a growing interest in electric vehicles and hybrid electric vehicles that can replace vehicles that use fossil fuels, such as gasoline and diesel vehicles, which are major problem of air pollution.

Research on the use of lithium secondary batteries as a power source for such electric vehicles and hybrid electric vehicles is actively underway. A lithium secondary battery is a secondary battery that is generally composed of a positive electrode containing a positive electrode active material, a negative electrode containing a negative electrode active material, a separator and an electrolyte, and is charged and discharged by the intercalation-deintercalation of lithium ions.

Lithium secondary batteries have the merits of high energy density, large electromotive force, and high-capacity, so they are applied in various fields. In particular, with the rapid rise of electric vehicles (EVs) in recent years, there is a growing need to improve the fast charging characteristic of lithium ion secondary batteries while preserving the existing capacity. This improvement in fast charging can only be attributed to the role of the active material of the negative electrode, which is responsible for the storage of lithium ions during charging. Since the active material of the negative electrode is mainly composed of carbon/graphite-based materials, it is important to form a stable SEI (Solid Electrolyte Interface) during charging.

In terms of fast charging and life-cycle (stability), an artificial graphite has been the most seamlessly adopted, and we expect this trend to continue. In order to obtain artificial graphite, it is difficult to construct equipment to obtain secondary particles by mixing coke particles and binder materials and heat treating them, and in actual implementation, some contamination problems exist.

There are drawbacks that make it difficult to guarantee uniformity so in terms of quality implementation by dispose. Therefore, it is necessary to proceed with the minimum number of processes.

### SUMMARY OF THE INVENTION

One embodiment is to provide a negative electrode active material for a lithium secondary battery manufactured without including an assemble process, a manufacturing method thereof, and a secondary battery including the same.

One embodiment of the present invention is to provide a negative electrode active material for a lithium secondary battery manufactured without going through an assemble process using a liquid coating material, a manufacturing method thereof, and a secondary battery including the same.

The negative electrode active material for a lithium secondary battery according to one embodiment of the present invention is a manufactured by method of negative electrode active material for lithium secondary battery, comprising:
preparing an artificial graphite;
forming a coating layer covering the artificial graphite by mixing the artificial graphite and a liquid coating material; and
carbonizing the artificial graphite on which the coating layer is formed;
wherein, the liquid coating material has a viscosity of 300 to 25000 mPa s at 35 °C.

In the step of forming a coating layer, the liquid coating material content for 100 parts by weight of artificial graphite is 5 to 30 parts by weight.

In the step of forming the coating layer, the fixed carbon content at 25 °C of the liquid coating material is 15 to 60 wt%.

The step of preparing artificial graphite comprises: pulverizing a coke; and graphitizing the coke.

In the step of preparing artificial graphite, the artificial graphite is coal-based coke-derived artificial graphite, petroleum-based coke-derived artificial graphite, or a mixture thereof.

The artificial graphite is a mixture of the artificial graphite derived from coal-based coke and the artificial graphite derived from petroleum-based coke, and more than 50 parts by weight of petroleum-based coke-derived artificial graphite is mixed with respect to 100 parts by weight of the mixture.

In the step of preparing artificial graphite, a particle size SPAN ((D90-D10)/D50) of the artificial graphite is 0.7 to 2.5.

In the step of forming a coating layer, the liquid coating material is a soft-graphitized carbon precursor or a hard-graphitized carbon precursor.

Ihe carbonization temperature is 800 to 2,000 °C.

In the step of forming a coating layer, the mixing of the artificial graphite and the liquid coating material is performed at a temperature of 50 °C or less.

The negative electrode active material for a lithium secondary battery according to one embodiment of the present invention is a negative electrode active material for lithium secondary battery, comprising:
an artificial graphite; and a carbon coating layer formed on the surface of the artificial graphite; wherein, the carbon coating layer is a carbonized liquid coating layer having a viscosity of 300 to 25,000 mPa·s at 35 °C.

The artificial graphite is an artificial graphite derived from coal-based coke, an artificial graphite derived from petroleum-based coke, or a mixture thereof.

The artificial graphite is a mixture of the artificial graphite derived from coal-based coke and the artificial graphite derived from petroleum-based coke, more than 50 parts by weight of the artificial graphite derived from petroleum-based coke based on 100 parts by weight of the mixture.

The lithium secondary battery according to one embodiment of the invention includes a negative electrode including a negative electrode active material manufactured from a negative electrode active material manufacturing method for the lithium secondary battery; a positive electrode; and an electrolyte.

The present invention negative electrode active material for a lithium secondary battery according to one embodiment, its manufacturing method, and a secondary battery including the same may not include an assemble process by controlling the viscosity of the liquid coating material.

A negative electrode active material for a lithium secondary battery according to one embodiment, a manufacturing method thereof, and a secondary battery including the same have excellent electrode adhesion.

A negative electrode active material for a lithium secondary battery according to an embodiment, a manufacturing method thereof, and a secondary battery including the same can provide an artificial graphite negative electrode active material composed of single particles without a separate assembly process.

### DETAILED DESCRIPTION OF THE EMBODIMENTS

Terms such as first, second and third are used to describe, but are not limited to, the various parts, components, region, layers and/or sections. These terms are used only to distinguish one part, component, region, layer, or section from another part, component, area, layer, or section. Accordingly, a first part, component, region, layer or section described herein may be referred to as a second part, component, region, layer or section without departing from the scope of the present invention.

The technical terms used herein are intended to refer only to certain exemplary embodiments and are not intended to limit the present invention. The singular forms used here include plural forms unless the context clearly indicates the opposite. The meaning of "comprising" as used in a specification is to specify a particular characteristic, region, integer, step, behavior, element, and/or component, and does not exclude the existence or added any other characteristic, region, integer, step, behavior, element, and/or component.

When we say that a part is "on" or "above" another part, it may be directly on or above the other part, or it may entail another part in between. In contrast, when we say that something is "directly on" of something else, we don't interpose anything between them.

Also, unless otherwise noted, "%" refers to "wt%", where 1 ppm is 0.0001 wt%.

Unless otherwise defined, all terms used herein, including technical and scientific terms, have the same meaning as commonly understood by a person of ordinary skill in the technical field to which the present invention belongs. Commonly used dictionary-defined terms are further construed to have meanings consistent with the relevant technical literature and the present disclosure, and are not to be construed in an idealized or highly formal sense unless defined.

Hereinafter, an exemplary embodiment of the present invention will be described in detail so that a person of ordinary skill in the technical field to which the present invention belongs may readily practice it. As those skilled in the art would realize, the described embodiments may be modified in various different ways, all without departing from the spirit or scope of the present invention.

Hereinafter, each step will be looked at in detail.

The negative electrode active material for a lithium secondary battery according to one embodiment of the present invention is a manufactured by method of negative electrode active material for lithium secondary battery, comprising:
preparing an artificial graphite; forming a coating layer covering the artificial graphite by mixing the artificial graphite and a liquid coating material; and carbonizing the artificial graphite on which the coating layer is formed.

In the manufacturing method of the negative electrode active material for the secondary battery, the step of preparing the artificial graphite comprises pulverizing a coke; and graphitizing the coke.

In addition, in the step of preparing artificial graphite, the artificial graphite is coal-based coke-derived artificial graphite, petroleum-based coke-derived artificial graphite or mixture thereof. That is, the artificial graphite may be obtained by pulverizing and graphitizing coal-based coke, petroleum-based coke or mixture thereof.

In addition, in the step of preparing artificial graphite; in the case where the artificial graphite is a mixture of artificial graphite derived from coal-based coke and artificial graphite derived from petroleum coke, the artificial graphite derived from petroleum-based coke may be mixed in an amount of 50 parts by weight or more with respect to 100 parts by weight of artificial graphite derived from coal-based coke and artificial graphite derived from petroleum coke.

That is, the coke used in the step of preparing artificial graphite is coal-based coke, petroleum-based coke or a mixture thereof. In addition, when using a mixture of coal-based coke and petroleum-based coke, petroleum-based coke may be included in less than 50 parts by weight with respect to 100 parts by weight of the mixture.

In addition, coal-based coke or petroleum-based coke may be needle-shaped coke, isotropic coke or mixture thereof, respectively. In addition, coal-based coke or petroleum-based coke may be green coke, calcined coke or mixture thereof, respectively.

Also, artificial graphite according to the present invention is not an assembled product. That is, artificial graphite is a primary particle, a single particle itself, and is not assembled, and soft carbon adhesive or hard carbon adhesive is not included in artificial graphite used as a raw material in the negative electrode active material manufacturing method.

The pulverizing method used in the step of pulverizing the coke included in preparing the artificial graphite, is not limited as long as the grinding (pulverizing) method can be adjusted to the particle size described below, but for example Jet mill, Pin mill, Air classifier mill, Raymond mill, jaw crusher, etc. can be used. The ground coke can be classified using a suitable sieve.

In addition, in the step of preparing artificial graphite, the artificial graphite particle size SPAN ((D90-D10)/D50) is 0.7 to 2.5. In addition, the artificial graphite particle size D50 is 10 to 20 µm, D10 is 5 µm or more, and D90 is 40 µm or less. In addition, if artificial graphite derived from coal-based coke and artificial graphite derived from petroleum-based coke are mixed and used, it is preferable that the two particle sizes are similar.

In the step of graphitizing coke in the step of preparing artificial graphite, the graphitization temperature is 2,200 to 3,000 °C, and the graphitization treatment time is more than 3 hours.

In the manufacturing method of the negative electrode active material for the secondary battery, the liquid coating material in the step of forming the coating layer has a viscosity of 300 to 25,000 mPa·s at 35°C. Specifically, the liquid coating material has a viscosity of 1,000 to 15,000 mPa·s at 35°C. More specifically, the liquid coating material has a viscosity of 8,000 to 10,000 mPa·s at 35°C.

If the viscosity of the liquid coating material is too low, the wettability is not good, so it is separated from the base material and the base material is incompletely coated. However, if the viscosity of the liquid coating material is too high, the viscosity is too high, so it has physical properties closer to solid than liquid, causing phase separation, resulting in incomplete coating on the base material. That is, the coating on the base material can be made well only when the viscosity range is satisfied.

In addition, by controlling the viscosity of the liquid coating material in the range in the negative electrode active material manufacturing method for lithium secondary batteries according to the present invention, artificial graphite composed of single particles, that is, only primary particles, can be directly coated. In addition, it can provide an excellent negative electrode active material having a good adherence without going through a separate assembly process, and energy and cost reduction effects can be obtained during the process.

In addition, in the step of forming the coating layer, the fixed carbon content (remaining carbon amount) at 25 °C of the liquid coating material is 15 to 60 wt%. In addition, if the amount of fixed carbon is too low, in order to realize the action as a coating material, the rotation rate of the mixer must be increased when mixing with artificial graphite, and as the rotation rate increases, the temperature inside the mixer and the mixture rises, resulting in performance may be deterioration. On the other hand, if the amount of fixed carbon is too large, it is difficult to liquidate, so that the desired advantages cannot be obtained through liquid coating, and there are drawbacks that must be processed in a higher process.

In addition, in the step of forming the coating layer, the liquid coating material is not limited as long as it satisfies the viscosity and fixed carbon content.

The liquid coating material may be a soft carbon precursor or a hard carbon precursor among amorphous carbon-based materials. This soft graphitizing carbon precursor may be coal-based pitch, petroleum-based pitch or coal tar. Accordingly, in the case of using a soft graphitized carbon-based precursor material, structural stability can be enhanced after carbonization through heat treatment. Hard carbon (hard soft graphitizing carbon) may be a polyimide resin, a furan resin, a phenol resin, a polyvinyl alcohol resin, a cellulose resin, an epoxy resin and a polystyrene resin. Hard graphitizing carbon-based precursor materials can also enhance structural stability after carbonization through heat treatment.

For example, it may be at least one selected from the group consisting of liquid phenol resin, liquid petroleum pitch, liquid coal pitch, and coal tar. That is, the liquid coating material may be liquid phenolic resin, liquid petroleum pitch, liquid coal pitch, or coal tar, and may satisfy the viscosity and fixed carbon ranges.

In addition, in the step of forming a coating layer, the liquid coating material content with respect to 100 parts by weight of artificial graphite is 5 to 30 weight ratio. Specifically, the liquid coating material content for 100 parts by weight of artificial graphite may be 10 to 30 parts by weight or 15 to 25 parts by weight. If the liquid coating material content does not satisfy the range, there is a problem that the electrode adherence of the negative electrode active material is not sufficient for use in the product (e.g., 300gf/cm² or less).

In addition, in the step of forming a coating layer, mixing of artificial graphite and liquid coating material is performed at a temperature of 50 °C or less.

The mixing time of the artificial graphite and the liquid coating material and the speed of the mixer (e.g., rotation speed (rpm) in the case of a rotation type mixer) can be adjusted according to the viscosity of the liquid coating material. If the viscosity of the liquid coating material is too low, it is good to lengthen the mixing time and increase the mixer speed for good base material coating. On the other hand, if the viscosity of the liquid coating material is too high, on the contrary, it is better to shorten the mixing time and slow the mixer speed for good base material coating. Preferably, the mixing rotation speed is 100 rpm or more, and the mixing time may be 15 minutes or more. If the time is too short, the base material may not be completely coated.

In addition, in the step of forming the coating layer, the liquid coating material may be charged in the mixing reactor above the artificial graphite. This is to ensure that the liquid coating material can be spread and applied to the artificial graphite as uniformly as possible.

The mixing reactor may have one or more rotation units. The mixing reactor may have two or more rotation units, and the two or more rotation units may preferably simultaneously perform idle rotation.

The unreacting region of the mixed reactor may be less than 10 area% of the entire area. The non-reacting region means the part of the reactor that does not reach the rotation part of the mixing reactor.

In the manufacturing method of the negative electrode active material for the secondary battery, the step of carbonizing the artificial graphite on which the coating layer is formed; the carbonization temperature is 800 to 2,000 °C. Specifically, the carbonization temperature is 1,000 to 1,500°C, or 1,200 to 1,500°C. Specifically, the temperature increase speed to the carbonization temperature is 3 to 8 °C/min, and it can be carbonized by maintaining the carbonization temperature for 1 to 5 hours. If the carbonization temperature is too low, the volatile matter removal rate is low, resulting in lower quality of the final product. If the carbonization temperature is too high, there is a problem that unnecessary energy consumption occurs at a temperature close to graphitization.

The negative electrode active material for a lithium secondary battery according to one embodiment of the present invention is a negative electrode active material for lithium secondary battery, comprising:
an artificial graphite; and a carbon coating layer formed on the surface of the artificial graphite; wherein, the carbon coating layer is a carbonized liquid coating layer having a viscosity of 300 to 25,000 mPa·s at 35 °C.

The artificial graphite is an artificial graphite derived from coal-based coke, an artificial graphite derived from petroleum-based coke, or a mixture thereof.

The artificial graphite is a mixture of the artificial graphite derived from coal-based coke and the artificial graphite derived from petroleum-based coke, more than 50 parts by weight of the artificial graphite derived from petroleum-based coke based on 100 parts by weight of the mixture.

A lithium secondary battery according to one embodiment includes a negative electrode including a negative electrode active material manufactured by the manufacturing method described above; positive electrode; and electrolytes. Specifically, the lithium secondary battery may further include a separator disposed between the positive electrode and the negative electrode.

The negative electrode may be prepared by preparing a composition for forming a negative electrode active material layer by mixing the negative electrode active material prepared according to an embodiment, a binder, and optionally a conductive material, and then applying the composition to the negative electrode current collector.

The negative electrode current collector may be, for example, copper foil, nickel foil, stainless steel, titanium foil, nickel foam, copper foam, a polymer substrate coated with a conductive metal, or a combination thereof.

The binder includes polyvinyl alcohol, carboxymethylcellulose/styrenebutadiene rubber, hydroxypropylene cellulose, diacetylene cellulose, polyvinyl chloride, polyvinylpyrrolidone, polytetrafluoroethylene, polyvinylidene fluoride, polyethylene or polypropylene can be used, but is not limited thereto. The binder may be mixed in an amount of 1 wt% to 30 wt% based on the total amount of the composition for forming the negative electrode active material layer.

The conductive material is not particularly limited as long as it has conductivity without causing chemical change in the battery. Specifically, graphite such as natural graphite and artificial graphite; carbon black such as acetylene black, ketchen black, channel black, furnace black, lamp black, and summer black; conductive fibers such as fibers and metal fibers; metal powder such as fluorinated carbon, aluminum, and nickel powder; conductive metal oxides such as zinc oxide, conductive whiskey titanium oxide (potassium titanate); a conductive material such as a polyphenylene derivative may be used. The conductive material may be mixed in an amount of 0.1 wt% to 30 wt% based on the total amount of the composition for forming the negative electrode active material layer.

Next, the positive electrode may be prepared by mixing a positive electrode active material, a binder, and optionally a conductive material to prepare a composition for forming a positive electrode active material layer, and then applying the composition to a positive electrode current collector. At this time, the binder and conductive material are used in the same way as in the case of the negative electrode described above.

The positive electrode current collector may use, for example, stainless steel, aluminum, nickel, titanium, sintered carbon, or surface treatment of aluminum or stainless steel with carbon, nickel, titanium, silver, or the like.

As the positive electrode active material, a compound capable of reversible intercalation and deintercalation of lithium (lithiated intercalation compound) can be used.

The positive electrode active material may specifically use one or more of cobalt, manganese, nickel or a composite oxide of its metal and lithium, and as a specific example, a compound expressed by one of the following Chemical Formulas may be used. LiₐA_{1-b}R_{b}D₂ (where 0.90 ≤ a ≤ 1.8 and 0 ≤ b ≤ 0.5); LiₐE_{1-b}R_{b}O_{2-c}D_{c} (where 0.90 ≤ a ≤ 1.8, 0 ≤ b ≤ 0.5, and 0 ≤ c ≤ 0.05); LiE_{2-b}R_{b}O_{4-c}D_{c} (where 0 ≤ b ≤ 0.5 and 0 ≤ c ≤ 0.05); LiₐNi_{1-b-c}Co_{b}R_{c}O_{α} (where 0.90 ≤ a ≤ 1.8, 0 ≤ b ≤ 0.5, 0 ≤ c ≤ 0.05, and 0 < α ≤ 2); LiₐNi_{1-b-c}Co_{b}R_{c}O_{2-α}Z_{α} (where 0.90 ≤ a ≤ 1.8, 0 ≤ b ≤ 0.5, 0 ≤ c ≤ 0.05, and 0 < α < 2); LiₐNi_{1-b-c}Co_{b}R_{c}O_{2-α}Z₂ (where 0.90 ≤ a ≤ 1.8, 0 ≤ b ≤ 0.5, 0 ≤ c ≤ 0.05, and 0 < α < 2); LiₐNi_{1-b-c}Mn_{b}R_{c}O_{α} (where 0.90 ≤ a ≤ 1.8, 0 ≤ b ≤ 0.5, 0 ≤ c ≤ 0.05, and 0 < α ≤ 2); LiₐNi_{1-b-c}Mn_{b}R_{c}O_{2-α}Z_{α} (where 0.90 ≤ a ≤ 1.8, 0 ≤ b ≤ 0.5, 0 ≤ c ≤ 0.05, and 0 < α < 2); LiₐNi_{1-b-c}Mn_{b}R_{c}O_{2-α}Z₂ (where 0.90 ≤ a ≤ 1.8, 0 ≤ b ≤ 0.5, 0 ≤ c ≤ 0.05, and 0 < α < 2); LiₐNi_{b}E_{c}G_{d}O₂ (where 0.90 ≤ a ≤ 1.8, 0 ≤ b ≤ 0.9, 0 ≤ c ≤ 0.5, and 0.001 ≤ d ≤ 0.1); LiₐNi_{b}Co_{c}Mn_{d}GeO₂ (where 0.90 ≤ a ≤ 1.8, 0 ≤ b ≤ 0.9, 0 ≤ c ≤ 0.5, 0 ≤ d ≤ 0.5, and 0.001 ≤ e ≤ 0.1); LiₐNiG_{b}O₂ (where 0.90 ≤ a ≤ 1.8 and 0.001 ≤ b ≤ 0.1); LiₐCoG_{b}O₂ (where 0.90 ≤ a ≤ 1.8 and 0.001 ≤ b ≤ 0.1); LiₐMnG_{b}O₂ (where 0.90 ≤ a ≤ 1.8 and 0.001 ≤ b ≤ 0.1); LiₐMn₂G_{b}O₄ (where 0.90 ≤ a ≤ 1.8 and 0.001 ≤ b ≤ 0.1); QO₂; QS₂; LiQS₂; V₂O₅; LiV₂O₅; LiTO₂; LiNiVO₄; Li _{(3-f)}J₂ PO₄₃ (0 ≤ f ≤ 2); Li _{(3-f)}Fe₂ PO₄₃ (0 ≤ f ≤ 2); and LiFePO₄.

In the above formula, A is Ni, Co, Mn, or a combination thereof; R is Al, Ni, Co, Mn, Cr, Fe, Mg, Sr, V, a rare earth element, or a combination thereof; D is O, F, S, P, or combination thereof; E is Co, Mn, or a combination thereof; Z is F, S, P, or a combination thereof; G is Al, Cr, Mn, Fe, Mg, La, Ce, Sr, V, or a combination thereof; Q is Ti, Mo, Mn, or a combination thereof; T is Cr, V, Fe, Sc, Y, or a combination thereof; and J is V, Cr, Mn, Co, Ni, Cu, or a combination thereof.

Non-aqueous electrolytes or known solid electrolytes can be used as electrolytes filled in the lithium secondary battery, and lithium salts dissolved in them can be used.

The lithium salt may use, for example, at least one selected from the group consisting of LiPF₆, LiBF₄, LiSbF₆, LiAsF₆, LiClO₄, LiCF₃SO₃, Li(CF₃SO₂)₂N, LiC₄F₉SO₃, LiSbF₆, LiAlO₄, LiAlCl₄, LiCl, and LiI. there is.

As the solvent of the non-aqueous electrolyte, for example, cyclic carbonates such as ethylene carbonate, propylene carbonate, butylene carbonate, and vinylene carbonate; chain carbonates, such as dimethyl carbonate, methyl ethyl carbonate, and diethyl carbonate; esters such as methyl acetate, ethyl acetate, propyl acetate, methyl propionate, ethyl propionate, and γ-butyrolactone; ethers such as 1,2-dimethoxyethane, 1,2-diethoxyethane, tetrahydrofuran, 1,2-dioxane, and 2-methyltetrahydrofuran; nitriles such as acetonitrile; amides such as dimethylformamide may be used, but is not limited thereto. These may be used alone or in combination of a plurality of them. Particularly, a mixed solvent of cyclic carbonate and chain carbonate can be preferably used.

Also, as an electrolyte, a gel polymer electrolyte impregnated with an electrolyte solution in a polymer electrolyte such as polyethylene oxide or polyacrylonitrile, or an inorganic solid electrolyte such as Lil or Li₃N is possible.

The separator is made of chemically resistant and hydrophobic olefin-based polymers such as polypropylene; a sheet or non-woven fabric made of glass fiber, polyethylene, etc. may be used. When a solid electrolyte solution such as a polymer is used as the electrolyte solution, the solid electrolyte solution may also serve as a separator.

### DETAILED DESCRIPTION OF THE EMBODIMENTS

Hereinafter, an exemplary embodiment will be described in detail so that a person of an ordinary skill can easily practice it in the technical field to which the present invention belongs. However, the present invention may be embodied in many different forms, and is not limited to the exemplary embodiment described herein.

### Experimental Example 1 - Electrode adherence experiment according to base material composition

A negative electrode active material was prepared with the composition shown in Table 1 below. In Table 1 below, the particle size span means (D90-D10)/D50. The liquid coating material was mixed at 20wt% compared to the base material, and mixing was conducted for 30 minutes through idle rotation at 150 rpm using a Nauta Mixer. Afterwards, the base material positioned outside the coating material was carbonized at 1,200°C. At this time, the heating speed up to the carbonization temperature was set at 5 °C/min and maintained at the carbonization temperature for 3 hours to carbonize, and then cooled naturally to obtain a negative electrode active material prepared at 100 °C.

97 wt% of the prepared negative electrode active material, 2 wt% of a binder including carboxymethyl cellulose and styrene butadiene rubber, and 1 wt% of Super P conductive material were mixed in a distilled water solvent to prepare a negative electrode active material slurry.

After the negative electrode active material slurry was applied to the copper (Cu) current collector, it was dried at 100°C for 10 minutes and then compressed in a roll press. Then, the time point at which desorption occurred during drying in a vacuum oven at 100 °C was measured. If desorption does not occur for 12 hours in the corresponding condition, it can be used as an electrode, so it was measured only for 12 hours. At this time, desorption means that the negative electrode active material is separated from the Cu plate, which is the negative electrode current collector.

The electrode density of the vacuum-dried negative electrode was 1.5 to 1.7 g/cc.

**(Table 1)**

| Categ ory | base material | Particle size distribution (µm) | | | | liquid coating material | Viscosity mPa s (at the time of final product standard measurement) | Electrode adherence (h) |
|---|---|---|---|---|---|---|---|---|
| | | D10 | D50 | D90 | Span | | | |
| 1 | natural flake graphite (purity. 99.7%) | 8 | 15 | 37 | 1.93 | liquid phenolic resin | 30000 | 2 |
| 2 | natural flake graphite (pure fig. 99.7%) | 4 | 20 | 42 | 190 | liquid petroleum pitch | 35000 | 0.5 |
| 3 | Artificial graphite (graphitization of coal-based green isostatic coke at 2,500°C) | 9 | 16 | 35 | 163 | liquid phenolic resin | 20000 | 12 |
| 4 | Artificial graphite (graphitization of petroleum-based calcined needle coke at 2,500°C) | 7 | 15 | 34 | 180 | liquid petroleum pitch | 18000 | 12 |
| 5 | Artificial graphite (category 3 graphite category 4 graphite mixture = 3:7) | 6 | 19 | 38 | 168 | coal tar | 23000 | 12 |
| 6 | Artificial graphite (category 3 graphite category 4 graphite mixture = 5:5) | 7 | 18 | 36 | 161 | liquid petroleum pitch | 34000 | 4 |

Looking at the results in Table 1, in the case of natural graphite as in the case of categories 1 and 2, electrode adherence was measured low in all cases where liquid phenol resin and liquid petroleum pitch were used as liquid coating materials.

Categories 5 and 6 both used a mixture of coal-based and petroleum-based artificial graphite, but the results were contradictory. That is, when mixing and using coal-based and petroleum-based artificial graphite having similar particle sizes, it was confirmed that electrode adherence was excellent only when petroleum-based artificial graphite was mixed more than coal-based artificial graphite. In other words, it was found that the electrode adherence was inferior in the case of category 6 in which the particle size measurement laser peak was distributed in two or more when artificial graphite was used.

### Experimental Example 2 - Measurement of adherence according to liquid coating material viscosity

A negative electrode active material was made with the composition shown in Table 2 below, and a negative electrode containing it was prepared. The negative electrode manufacturing method was prepared in the same manner as in Experimental Example 1.

The adherence test was tested by the ASTM D4541 test method by cutting the finally manufactured electrode into a 25cm² size.

**(Table 2)**

| Categ ory | base material | Liquid coating material content (wt%) compared to base material | particle size distribution | | | | liquid coating material | | Adherence (gf/cm²) |
|---|---|---|---|---|---|---|---|---|---|
| | | | D10 | D50 | D90 | SPAN | Classification | Viscosity (@35°C, mPa s) | |
| 7 | Artificial graphite (coal-based green isostatic coke 2,500°C graphitization) | 5 | 9 | 16 | 35 | 163 | liquid phenolic resin | 24,000 | 50 |
| 8 | | 15 | 9 | 16 | 35 | 1.63 | | 24,000 | 500 |
| 9 | | 25 | 9 | 16 | 35 | 163 | | 24,000 | 860 |
| 10 | | 35 | 9 | 16 | 35 | 163 | | 24,000 | 200 |
| 11 | Artificial graphite (2,500°C | 15 | 7 | 15 | 34 | 180 | coal tar | 9,800 | 690 |
| 12 | | 25 | 7 | 15 | 34 | 180 | | 9,800 | 750 |
| 13 | | 15 | 7 | 15 | 34 | 1.80 | | 270 | 180 |
| 14 | graphitization of petroleum-based calcined needle coke) | 25 | 7 | 15 | 34 | 180 | | 270 | 270 |
| 15 | Artificial graphite (2,500°C graphitization of petroleum-based calcined needle coke) | 25 | 7 | 15 | 34 | 180 | liquid petroleum pitch | 250 | 80 |
| 16 | | 25 | 7 | 15 | 34 | 180 | | 450 | 590 |

The adherence suitable for use as a negative electrode should be over 300gf/cm². Categories 7 to 10 differ only in the liquid coating material content compared to the base material, and use the same base material and liquid coating material with the same viscosity. However, electrode adherence was low in categories 7 and 10 with low or high liquid coating material content.

Categories 11 and 13 used the same base material and had the same liquid coating material content compared to the base material, but used coal tar with different viscosities. In the case of category 13 with a low result viscosity of 270 mPas, electrode adherence was low. Accordingly, it was found that the viscosity of the liquid coating material should be greater than 270 mPas.

Categories 12 and 14 also showed the same results as Categories 11 and 13.

For reference, when 25wt% of liquid petroleum pitch was used as the liquid coating material for the same base material, and the viscosities of the liquid petroleum pitch were different at 250 mPas and 450 mPas, the adherence was 80 gf/cm² when the viscosity was 250 mPas, which was too low, when the viscosity was 450 mPa, the adherence was confirmed to be 590 gf/cm².

The present invention is not limited to the exemplary embodiment, but can be manufactured in a variety of different forms, and in the technical field to which the present invention belongs, a person of an ordinary skill does not change the technical idea or essential features of the present invention. It will be appreciated that it may be embodied in specific forms. Therefore, the exemplary embodiment described above should be understood as illustrative in all respects and not limiting.

## Claims

1. A manufacturing method of negative electrode active material for lithium secondary battery, comprising:
preparing an artificial graphite;
forming a coating layer covering the artificial graphite by mixing the artificial graphite and a liquid coating material; and
carbonizing the artificial graphite on which the coating layer is formed;
wherein, the liquid coating material has a viscosity of 300 to 25000 mPa s at 35 °C.

2. The method of claim 1, wherein:
in the step of forming a coating layer, the liquid coating material content for 100 parts by weight of artificial graphite is 5 to 30 parts by weight.

3. The method of claim 1, wherein:
in the step of forming the coating layer, the fixed carbon content at 25 °C of the liquid coating material is 15 to 60 wt%.

4. The method of claim 1, wherein:
the step of preparing artificial graphite comprises:
pulverizing a coke; and
graphitizing the coke.

5. The method of claim 1, wherein:
in the step of preparing artificial graphite, the artificial graphite is coal-based coke-derived artificial graphite, petroleum-based coke-derived artificial graphite, or a mixture thereof.

6. The method of claim 5, wherein:
the artificial graphite is a mixture of the artificial graphite derived from coal-based coke and the artificial graphite derived from petroleum-based coke, and more than 50 parts by weight of petroleum-based coke-derived artificial graphite is mixed with respect to 100 parts by weight of the mixture.

7. The method of claim 1, wherein:
in the step of preparing artificial graphite, a particle size SPAN ((D90-D10)/D50) of the artificial graphite is 0.7 to 2.5.

8. The method of claim 1, wherein:
in the step of forming a coating layer, the liquid coating material is a soft-graphitized carbon precursor or a hard-graphitized carbon precursor.

9. The method of claim 1, wherein:
the carbonization temperature is 800 to 2,000 °C.

10. The method of claim 1, wherein:
in the step of forming a coating layer, the mixing of the artificial graphite and the liquid coating material is performed at a temperature of 50 °C or less.

11. A negative electrode active material for lithium secondary battery, comprising:
an artificial graphite; and
a carbon coating layer formed on the surface of the artificial graphite;
wherein, the carbon coating layer is a carbonized liquid coating layer having a viscosity of 300 to 25,000 mPa·s at 35 °C.

12. The negative electrode active material of claim 11, wherein:
the artificial graphite is an artificial graphite derived from coal-based coke, an artificial graphite derived from petroleum-based coke, or a mixture thereof.

13. The negative electrode active material of claim 12, wherein:
the artificial graphite is a mixture of the artificial graphite derived from coal-based coke and the artificial graphite derived from petroleum-based coke,
more than 50 parts by weight of the artificial graphite derived from petroleum-based coke based on 100 parts by weight of the mixture.

14. A lithium secondary battery comprising:
a negative electrode comprising a negative electrode active material manufactured from the negative electrode active material manufacturing method for a lithium secondary battery of any one of claim 1 to claim 10;
a positive electrode; and
an electrolyte.
